(19)

Europäisches
Patentamt
European
Patent Office
Office européen
des brevets

(11) **EP 3 336 489 A1**

(12) **EUROPEAN PATENT APPLICATION**
published in accordance with Art. 153(4) EPC

(43) Date of publication:
**20.06.2018 Bulletin 2018/25**

(21) Application number: **16836517.9**

(22) Date of filing: **22.07.2016**

(51) Int Cl.:
*G01C 21/20* (2006.01)     *G01C 22/00* (2006.01)
*G05D 1/02* (2006.01)      *G01C 21/32* (2006.01)

(86) International application number:
**PCT/CN2016/091033**

(87) International publication number:
**WO 2017/028653 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.08.2015 CN 201510502547**

(71) Applicant: **Beijing Evolver Robotics Co., Ltd
Beijing 100190 (CN)**

(72) Inventors:
• **WANG, Xiaogang**
  **Beijing 100190 (CN)**
• **WANG, Wei**
  **Beijing 100190 (CN)**
• **WANG, Yuliang**
  **Beijing 100190 (CN)**
• **XUE, Lin**
  **Beijing 100190 (CN)**

(74) Representative: **Casalonga
Casalonga & Partners
Bayerstraße 71/73
80335 München (DE)**

(54) **METHOD AND SYSTEM FOR AUTOMATICALLY ESTABLISHING MAP INDOORS BY MOBILE ROBOT**

(57)     A method and a system for a mobile robot to self-establish a map indoors are provided, and the method comprises: forming an initialized map (101); marking a coordinate origin in the initialized map (102); causing the robot to travel throughout indoor accessible regions to record path information and environment information (103); causing the robot to calculate and mark a CV value of each grid in the map (104); and establishing the map according to the path information and the CV value (105), the path information and the CV value being obtained through calculation by using a mathematic algorithm. By adopting a grid map to perform modeling, real-time adjustment and correspondence of an indoor environment and grid information are realized and effectiveness of a map model is ensured; further, the grid map is easy to be maintained and is convenient for quick access of map data.

FIG. 1

EP 3 336 489 A1

## Description

Field of the Invention

The present invention relates to a technical field of automation, and particularly relates to a method and a system for a mobile robot to self-establish a map indoors.

Background of the Invention

Development of robot technology is common crystallization of comprehensive development of science and technology. Robots can be divided into military robots, industrial robots, service robots, etc., in terms of usage, wherein all of these robot types have a huge demand for mobile robots.

A research scope of mobile robots covers several aspects of system structure, control mechanism, information system, sensing technology, planning strategy and drive system, etc., and involves a plurality of disciplinary fields including mechanical kinematics, artificial intelligence, intelligent control, pattern recognition, image processing, visual technology, sensing technology, computer networks and communications, and biological information technology, etc. Mobile robots are not only widely applied in industries such as industry, agriculture, medical care, service, etc. but also well applied in harmful and dangerous situations such as fields of urban safety, national defense and space exploration, etc. Research level on mobile robots is an important indicator of development level of science and technology and comprehensive national strength of a country. "Robot revolution" is expected to become a starting point and an important growth point of the "third industrial revolution", and will affect a configuration of the global manufacturing industry. The International Federation of Robotics (IFR) predicts that the "Robot Revolution" will create a market with a scale of trillions of dollars, leading key technologies concerning robots such as new material functional modules, perception acquisition and recognition, intelligent control and navigation,etc. and markets to develop rapidly.

In research of autonomous mobile robots, robot navigation is a precondition for realizing robot intelligence. There are two key questions in navigation: the first is description of an environment to construct the map;and the second is localization of a position of a robot in the map. Among them, the map construction is a primary problem, and is a core technology to achieve the robot navigation and even higher intelligence, and is a premise to achieve localization. The map construction involves the following sub-problems: map expression methods, sensors, description and processing of uncertain information, robot localization and map establishment conducted simultaneously.

The map constructed by indoor robots is mainly a planar map, commonly used methods of which include a grid map, a geometric feature map and a topological map. The present technical solutions adopt the grid map.

The grid map divides a whole working environment into a number of grids of the same size, obtains information about existence of an obstacle in each grid using detectors such as a radar detector, a sonar detector, an ultrasonic detector, etc., and indicates a possibility of existence of the obstacle in each grid.Since the information for each grid directly corresponds to a certain region in a real environment, the grid map is easy to be created, maintained, and understood. The grid map uses probability values to represent uncertainty of a grid model and can provide accurate metric information. Because of these advantages, the grid map is largely used in mobile robots. However, when amount of data in the map is large, storage volume and data maintenance workload of the grid map are increased, which will place a heavy burden on real-time processing of a computer.

The geometric feature map extracts abstract geometric features from environment perception data collected by a robot, and uses relevant geometric features (such as points, lines, surfaces) to represent an environment. The method is more compact and convenient for position estimation and target recognition, but extraction of geometric information requires additional processing of the detected information, and thus the method is not applicable to unstructured map structure and accurate modeling can be achieved only if a large quantity of accurately measured data are acquired.

The topological map represents an indoor environment as a topological structure graph with nodes and associated connecting lines, wherein the nodes indicate important position points (corners, doors, elevators, stairs, etc.) in the environment, and sides indicate connection relationships such as corridors, etc. between the nodes. The method occupies a small storage space, can quickly achieve path planning, does not need accurate position information of a robot, and also provides a more natural interface for releasing instructions through human-computer interaction. However, this method ignores detailed information of the environment, and it is difficult to refinedly plan the path of the robot. In addition, when a detection error of a sensor is large, the topological map is difficult to be created and maintained. Moreover, if there are two places similar to each other in the environment, it is difficult to determine whether they are the same point on the map. This brings difficulties in making correct recognition in a wide range environment.

Expression methods of these three maps have their own advantages and disadvantages, and it is desired to achieve a high-precision map model that is easy to be maintained in connection with application situations of robots while being assisted by other technologies.

Summary of the Invention

The invention provides a method and a system for a mobile robot to self-establish a map indoors, which obtains path information and obstacle information from a detector in combination with characteristics of indoor movement to realize real-time adjustment and correspondence of an indoor environment and grid information and ensure effectiveness of a map model. Meanwhile, the grid map is easy to be maintained and is convenient for quick access of map data. Also, the present solutions have wide technical adaptability, can realize a rapid response to diversified environments, can quickly creates a dynamic map model reflecting information of a real environment, and can effectively realize localization and navigation of the robot.

The technical solutions of the present invention provides a method for a mobile robot to self-establish a map indoors, the method comprises the following steps:

forming an initialized map;
marking a coordinate origin in the initialized map;
causing the robot to travel throughout indoor accessible regions to record path information and environment information;
causing the robot to calculate and mark a CV value of each grid in the map; and
establishing the map according to the path information and the CV value.

Furthermore, said step of forming an initialized map further comprises:

the map is a meshed pattern constituted by a series of square grids;
the map marks positions of an indoor environment in form of grids, each grid representing an indoor region with an actual size of 200 mm × 200 mm; and
a user sets a size of the initialized map according to an indoor movable range of the robot.

Furthermore,the map stores information of a grid in a two-dimensional array, the two-dimensional array has a data type that is a customized data structure AStarNode defined as follows:

```
typedef struct AStarNode
{
  int s_x;
  int s_y;
  int s_g;
  int s_h;
  int s_cv;
  struct AStarNode * s_parent;
  int s_is_in_closetable;
  int s_is_in_opentable;
} AStarNode;
AStarNode map_maze [400] [400];
```

wherein, map_maze is a two-dimensional array of the AstarNode data structure; s_x is position information of horizontal coordinates (X coordinates); s_y is position information of vertical coordinates (Y coordinates); s_cv indicates the CV value of each grid, representing a probability that each grid is occupied by an obstacle and ranging from 0 to 1, 0 showing that the grid is not occupied by any obstacle, 1 showing that the grid is occupied by the obstacle, and a larger CV value means a greater probability that the grid is occupied by the obstacle; in the initialized map, the CV value of each grid is 1, showing that all of grids are occupied by obstacles.

Furthermore, said step of marking a coordinate origin in the initialized map further comprises:

taking a robot charging pile as the coordinate origin of the map; and
taking an east-west direction as an X-axis and taking a south-north direction as a Y-axis.

Furthermore, said step of causing the robot to travelling throughout indoor accessible regions to record path information and environment information further comprises:

the robot records data path information and the CV value during it travels indoors;
the robot marks position information of the accessible regions in the map according to measured values of a mileometer; and

the robot marks the CV value in the map according to values fusion-measured by an ultrasonic sensor.

Furthermore, the robot calculates X and Y coordinate values of a position in which it is located according to a mileometer in the following manner:

X coordinate value $X(k) = X(0) + \sum_{i=1}^{k-1} D(i)\cos(\varphi(i))$

Y coordinate value $Y(k) = Y(0) + \sum_{i=1}^{k-1} D(i)\sin(\varphi(i))$

angular change $\varphi(k) = \varphi(0) + \sum_{i=1}^{k-1} \Delta\varphi(i)$

wherein X(0), Y(0) are a position in which the robot is located at initial moment, and D(i) and $\varphi$(i) are a running distance and an orientation angle from a moment (i-1) to another moment (i) of an autonomous carriage respectively.

Furthermore, the robot performs fusion measurement by an ultrasonic sensor in two means:
a first means is data fusion of different sensors at the same moment, in which the CV value of each grid is estimated according to the Bayesian probability algorithm, and the Bayesian probability algorithm is given as follows:

obtaining the CV value by fusion of detected data of two ultrasonic sensors;
dividing a detection scope of each ultrasonic sensor into three classes including class I meaning non-occupation, class II meaning possible occupation, and class III meaning uncertainty;
defining a probability that a grid is occupied as P (O), and defining a probability that the grid is not occupied as P (E) = 1 - P (O), then

$$
P(E) = \begin{cases} (k+f)/2 & (dist \in I) \\ 1-(k+f)/2 & (dist \in II) \\ 0.5 & (dist \in III) \end{cases} ,
$$

wherein

$$
k = \frac{R-r}{R} ,
$$

$$
f = \frac{\beta - \alpha}{\alpha} ,
$$

R is an ultrasonic detection range, and r is an actually detected distance;
the CV value of each grid obtained after fusion of detected data of two ultrasonic sensors at the same moment

is $P(O\,|\,\{S_1\}) = \dfrac{P(S_2\,|\,O)\times P(\mathrm{O}\,|\,\mathrm{S}_1)}{P(S_2\,|\,O)\times P(\mathrm{O}\,|\,\mathrm{S}_1) + P(S_2\,|\,\overline{O})\times P(\overline{\mathrm{O}}\,|\,\mathrm{S}_1)}$ ; and

a second means is fusion of measured values of the ultrasonic sensor on the same grid at different time, and the CV value of the same grid at different moments is

$$
P(O\,|\,T_k) = \frac{P(T_k\,|\,O)\times P(\mathrm{O}\,|\,T_{k-1})}{P(T_k\,|\,O)\times P(\mathrm{O}\,|\,T_{k-1}) + P(T_k\,|\,\overline{O})\times P(\overline{\mathrm{O}}\,|\,T_{k-1})} .
$$

Furthermore, the method further comprises:

differentiating the CV value of each grid by colors in the map;
expressing a grid with a CV value of 0 to 0.2 that is a fully accessible region in white;

expressing a grid with a CV value of 0.2 to 0.8 that is a region where there may be an obstacle in gray; and expressing a grid with a CV value of 0.8 to 1 that is a completely non-accessible region in black.

Furthermore, the robot self-establishes the map after travelling throughout indoors and positions of doors are artificially revised in the map, and the method further comprises:

the robot uses an ultrasonic sensor on a side to measure a distance from a wall of the robot during the robot travels indoors, and in a state in which a door is opened, it is determined that the door is present by two jumps (getting larger for the first time and getting smaller for the second time) of readings of the ultrasonic sensor;
the robot marks a label of the door according to a middle position of the two jumps; and
after the establishment of the map is finished, labels for positions where no door exists are artificially eliminated through operating a software and positions where doors are present are labeled with other colors in an interface of the software.

The technical solutions of the present invention also provides a system for a mobile robot to self-establish a map indoors, the system comprises a mileometer, an ultrasonic sensor and a processing unit, wherein the mileometer is used to calculate a distance and an angle of the robot travelling indoors; the ultrasonic sensor is used to detect information of obstacles surrounding the robot at different distances, wherein the robot has one ultrasonic sensor on each of both sides and has one or more ultrasonic sensors on a front side; and the processing unit is used to calculate path information of the travelling robot and grid information of the map and store grid data of the map.

The technical solutions of the present invention adopt the mileometer to measure a travelling distance in real time, then deduce a position of the robot at any time in any place, and adopt the ultrasonic sensor to detect indoor environment information within a certain distance around the robot. The robot combines the deduced position and the detected surrounding indoor environment information to locate information of the surrounding obstacles in the map. The present solutions have strong correspondence of the grid map to the actual indoor environment,the map is easy to be maintained and is convenient for quick access of map data, and the solutions have wide technical adaptability, can quickly create a dynamic map model reflecting information of a real environment, and can effectively realize localization and navigation of the robot.

Other features and advantages of the present invention will be set forth later in the description, and will be partially obvious from the description, or may be learned by implement of the present invention. The objects and other advantages of the present invention may be realized and obtained by the structure particularly pointed out in the appended description, claims, and drawings.

The technical solution of the present invention will be described in further detail below with reference to the accompanying drawings and examples.

Brief Description of the Drawings

The accompanying drawings are intended to provide a further understanding of the present invention,constitute a part of the description, are used to explain the present invention in conjunction with embodiments of the present invention, and are not to be construed as limiting the present invention. In the drawings:

Fig. 1 is a flow chart of a method for a mobile robot to self-establish a map indoors in a first embodiment of the present invention;
Fig. 2 is a flow chart of a method for self-establishing an initialized grid map in a second embodiment of the present invention;

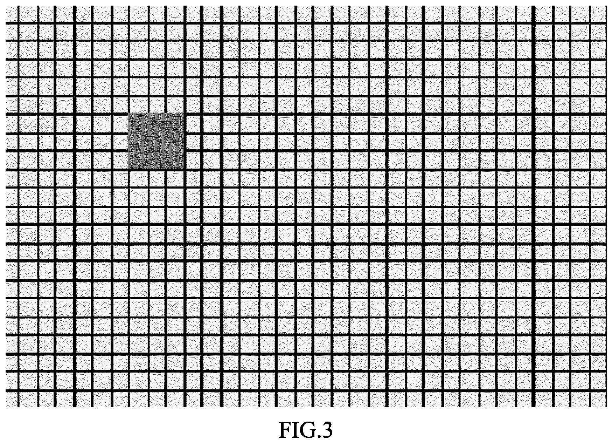

Fig. 3 is a schematic diagram of the initialized grid map in the second embodiment of the present invention;
Fig. 4 is a flow chart of a method for a mobile robot to record a path indoors in a third embodiment of the present invention;

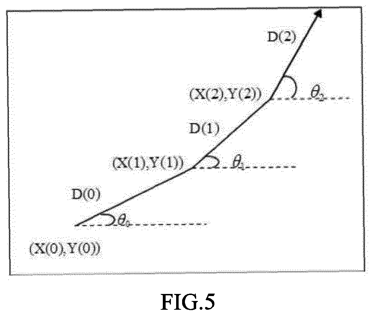

Fig. 5 is a schematic diagram of a principle for a mobile robot to record a path indoors in the third embodiment of the present invention;
Fig. 6 is a flow chart of a method for a robot to estimate CV values of grids in a fourth embodiment of the present invention;

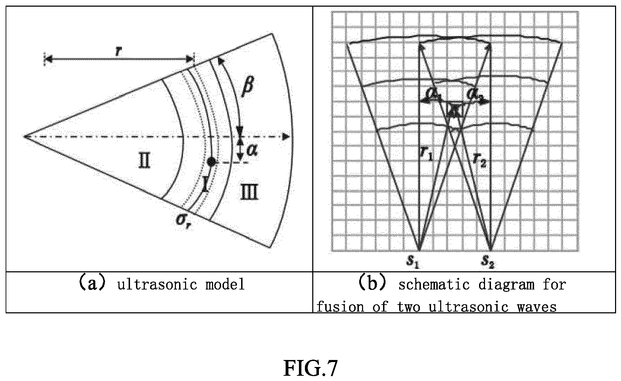

Fig. 7 is a schematic diagram of a principle for ultrasonic detection in the fourth embodiment of the present invention;
Fig. 8 is a flow chart of a method for artificially revising position information of doors in a fifth embodiment of the present invention; and
Fig. 9 is a structural diagram of a system for a mobile robot to self-establish a map indoors in the first to fourth embodiments of the present invention.

Detailed Description of the Preferred Embodiments

Preferred embodiments of the present invention will be described below with reference to the accompanying drawings, and it is to be understood that the preferred embodiments described herein are only for the purpose of illustration and explanation and are not intended to limit the present invention.

First embodiment: method for mobile Robot to self-establish map indoors.

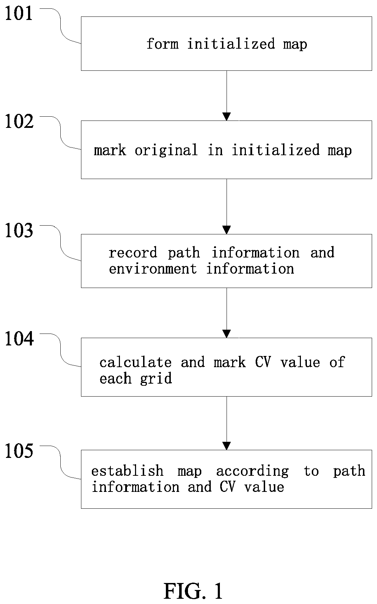

Fig. 1 is a flow chart of a method for a mobile robot to self-establish a map indoors in a first embodiment of the present invention. As shown in Fig. 1, the flow includes the following steps:

In step 101, an initialized map is formed.

The map is a meshed pattern constituted by a series of square grids;
the map marks positions of an indoor environment in form of grids, each grid representing an indoor region with an actual size of 200 mm × 200 mm; and
a user sets a size of the initialized map according to an indoor movable range of the robot.

The map stores information of a grid in a two-dimensional array, the two-dimensional array has a data type that is a customized data structure AStarNode defined as follows:

```
typedef struct AStarNode
{
  int s_x;
  int s_y;
  int s_g;
  int s_h;
  int s_cv;
  struct AStarNode * s_parent;
  int s_is_in_closetable;
  int s_is_in_opentable;
} AStarNode;
AStarNode map_maze [400] [400];
```

wherein, map_maze is a two-dimensional array of the AstarNode data structure; s_x is position information of horizontal coordinates (X coordinates); s_y is position information of vertical coordinates (Y coordinates); s_cv indicates the CV value of each grid, representing a probability that each grid is occupied by an obstacle and ranging from 0 to 1, 0 showing that the grid is not occupied by any obstacle, 1 showing that the grid is occupied by the obstacle, and a larger CV value means a greater probability that the grid is occupied by the obstacle; in the initialized map, the CV value of each grid is 1, showing that all of grids are occupied by obstacles.

In step 102, a coordinate origin is marked in the initialized map.

A robot charging pile is taken as the coordinate origin of the map;
the origin is on an edge of the map, in a central position of the edge of the map;
the origin is on the edge of the map;
a direction parallel to the edge of the map is an X-axis and a direction perpendicular to the edge of the map is a Y-axis.

In step 103, the robot is caused to travel throughout indoor accessible regions to record path information and environment information.

The robot starts recording data when it begins to move.

The robot marks position information of the accessible regions in the map according to measured values of a mileometer.

In step 104, the robot is caused to calculate and mark a CV value of each grid in the map.

The robot marks the CV value in the map according to values fusion-measured by an ultrasonic sensor.

In step 105, the map is established according to the path information and the CV value.

The robot self-establishes and forms the map according to the path information and the CV value during it travels indoors.

Positions of doors are marked in the map and then artificially revised, and the method further comprises:

the robot uses an ultrasonic sensor on a side to measure a distance from a wall of the robot during the robot travels indoors, and in a state in which a door is opened, it is determined that the door is present by two jumps (getting larger for the first time and getting smaller for the second time) of readings of the ultrasonic sensor;
the robot marks a label of the door according to a middle position of the two jumps; and
after the establishment of the map is finished, labels for positions where no door exists are artificially eliminated through operating a software and positions where doors are present are labeled with other colors in an interface of the software.

Second embodiment: method for self-establishing initialized grid map.

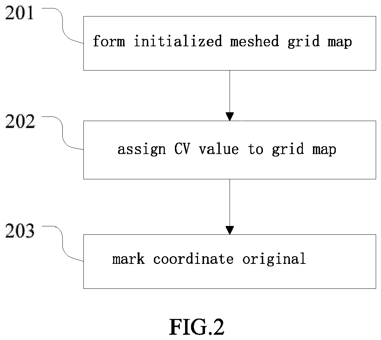

Fig. 2 is a flow chart of a method for self-establishing an initialized grid map in a second embodiment of the present invention. As shown in Fig. 2, the method flow includes the following steps:

In step 201, an initialized grid map is formed.

The map is a meshed pattern constituted by a series of square grids;
the map marks positions of an indoor environment in form of grids, each grid representing an indoor region with an actual size of 200 mm × 200 mm; and
a user sets a size of the initialized map according to an indoor movable range of the robot.
the map stores information of a grid in a two-dimensional array, the two-dimensional array has a data type that is a customized data structure AStarNode defined as follows:

```
typedef struct AStarNode
{
  Int s_x;
  Int s_y;
  Int s_g;
  Int s_h;
  Int s_cv;
  struct AStarNode * s_parent;
  int s_is_in_closetable;
  int s_is_in_opentable;
} AStarNode;
AStarNode map_maze [400] [400];
```

wherein, map_maze is a two-dimensional array of the AstarNode data structure; s_x is position information of horizontal coordinates (X coordinates); s_y is position information of vertical coordinates (Y coordinates); s_cv indicates the CV value of each grid, representing a probability that each grid is occupied by an obstacle and ranging from 0 to 1, 0 showing that the grid is not occupied by any obstacle, 1 showing that the grid is occupied by the obstacle, and a larger CV value means a greater probability that the grid is occupied by the obstacle.

In step 202, CV values are assigned to the grid map.

In the initialized map, the s_cv value (the CV value) of each grid is 1, showing that all of grids are occupied by obstacles.

In step 203, a coordinate origin is marked in the initialized map.

A robot charging pile is taken as the coordinate origin of the map; and
an east-west direction is taken as an X-axis and a south-north direction is taken as a Y-axis.

Third embodiment: method for mobile robot to record path indoors.

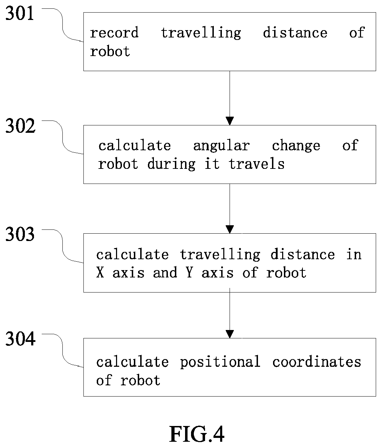

Fig. 4 is a flowchart of a method for a mobile robot to record a path indoors in a third embodiment of the present invention. As shown in Fig. 4, the flow includes the following steps:

In step 301, a travelling distance of the robot is recorded by use of a mileometer.

In step 302, an angular change of the robot during it travels is calculated.

$$\theta(\mathrm{k}) = \theta(0) + \sum_{i=1}^{k-1} \Delta\theta(i)$$

the angular change

ling distances of the robot i

In step 303, travelling distances of the robot in directions of the X and Y axes are calculated.

the travelling distance in the X-axis $X(k) = X(0) + \sum_{i-1}^{k-1} D(i)\cos(\theta(i))$ the travelling distance in the Y-axis

$$Y(k) = Y(0) + \sum_{i-1}^{k-1} D(i)\sin(\theta(i))$$ X(0), Y(0) are a position in which the robot is located at initial moment, and D(i)

and φ(i) are a running distance and an orientation angle from a moment (i-1) to another moment (i) of an autonomous carriage respectively.

In step 304, coordinate values of a position where the robot is located are calculated.

The X coordinate value is X(k) / 200, and the Y coordinate value is Y(k) / 200.

Fourth embodiment: method for robot to estimate CV values of grids.

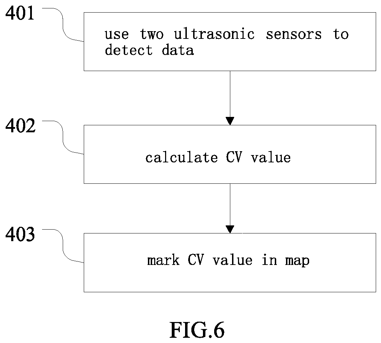

Fig. 6 is a flowchart of a method for a robot to estimate CV values of grids in a fourth embodiment of the present invention. As shown in Fig. 6, the flow includes the following steps:

In step 401, two ultrasonic sensors are used to detect data.

The two ultrasonic sensors are located right ahead of the robot side by side.

In step 402, CV values are calculated.

the robot performs fusion measurement by an ultrasonic sensor in two means:

a first means is data fusion of different sensors at the same moment, in which the CV value of each grid is estimated according to the Bayesian probability algorithm, and the Bayesian probability algorithm is given as follows:

obtaining the CV value by fusion of detected data of two ultrasonic sensors;

dividing a detection scope of each ultrasonic sensor into three classes including class I meaning non-occupation, class II meaning possible occupation, and class III meaning uncertainty;

defining a probability that a grid is occupied as P (O), and defining a probability that the grid is not occupied as P (E) = 1 - P (O), then

$$P(E) = \begin{cases} (k+f)/2 & (dist \in I) \\ 1-(k+f)/2 & (dist \in II) \\ 0.5 & (dist \in III) \end{cases},$$

wherein

$$k = \frac{R-r}{R},$$

$$f = \frac{\beta - \alpha}{\alpha},$$

R is an ultrasonic detection range, and r is an actually detected distance;

the CV value of each grid obtained after fusion of detected data of two ultrasonic sensors at the same moment

is $$P(O \mid \{S_1\}) = \frac{P(S_2 \mid O) \times P(O \mid S_1)}{P(S_2 \mid O) \times P(O \mid S_1) + P(S_2 \mid \overline{O}) \times P(\overline{O} \mid S_1)}; \text{ and}$$

a second means is fusion of measured values of the ultrasonic sensor on the same grid at different time, and the CV value of the same grid at different moments is

$$P(O \mid T_k) = \frac{P(T_k \mid O) \times P(O \mid T_{k-1})}{P(T_k \mid O) \times P(O \mid T_{k-1}) + P(T_k \mid \overline{O}) \times P(\overline{O} \mid T_{k-1})}.$$

In step 403, the CV values are marked in the map.

A grid with a CV value of 0 to 0.2 that is a fully accessible region is expressed in white;

a grid with a CV value of 0.2 to 0.8 that is a region where there may be an obstacle is expressed in gray; and a grid with a CV value of 0.8 to 1 that is a completely non-accessible region is expressed in black.

Fifth embodiment: method for artificially revising position information of doors.

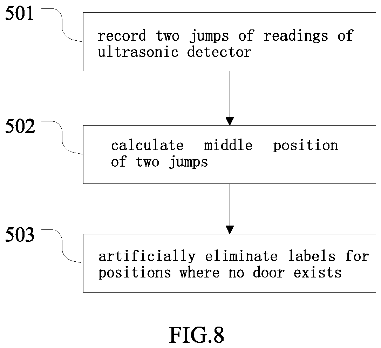

Fig. 8 is a flow chart of a method for artificially marking position information of doors in a fifth embodiment of the present invention. As shown in Fig. 8, the flow includes the following steps:

In step 501, the robot records two jumps of readings of an ultrasonic sensor.

The robot uses an ultrasonic sensor on a side to measure a distance from a wall of the robot during the robot travels indoors, and in a state in which a door is opened, it is determined that the door is present by two jumps (getting larger for the first time and getting smaller for the second time) of the readings of the ultrasonic sensor.

In step 502, a middle position of the two jumps is calculated.

The middle position of the two jumps is the position of the door.

Step 503, labels for positions where no door exists are artificially eliminated.

After the establishment of the map is finished, labels for positions where no door exists are artificially eliminated through a software and positions where doors are present are labeled with other colors in an interface of the software.

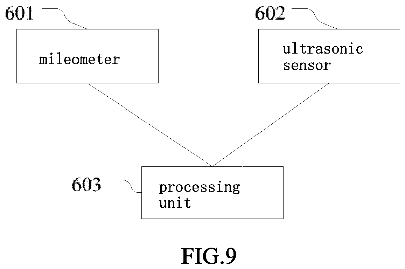

Fig. 9 is a structural diagram of a system for a mobile robot to self-establish a map indoors in the first to fourth embodiments of the present invention. The system includes a mileometer 601, an ultrasonic sensor 602 and a processing unit 603,wherein the mileometer is used to calculate a distance and an angle of the robot travelling indoors; the ultrasonic sensor is used to detect information of obstacles surrounding the robot at different distances, wherein the robot has one ultrasonic sensor on each of both sides and has one or more ultrasonic sensors on a front side; and the processing unit is used to calculate path information of the travelling robot and grid information of the map and store grid data of the map.

The technical solution of the present invention adopt the grid map to record information of the indoor environment and obtain path information and obstacle information from a detector in combination with characteristics of a limited indoor movable range of the robot to realize real-time adjustment and correspondence of an indoor environment and grid information and ensure effectiveness of a map model. Meanwhile, the grid map is easy to be maintained and is convenient for quick access of map data. Also, the present solutions have wide technical adaptability, can realize a rapid response to diversified environments, can quickly creates a dynamic map model reflecting information of a real environment, and can effectively realize localization and navigation of the robot.

It will be appreciated by those skilled in the art that the embodiments of the present invention may be provided as a method, a system, or a computer program product. Thus, the present invention may take forms of a full hardware embodiment, a full software embodiment, or a combination of software and hardware aspects. Moreover, the present invention may take a form of a computer program product implemented in one or more computer usable storage media (including but not limited to a disk storage and an optical memory, etc.) containing computer usable program codes.

The present invention has been described with reference to a flow chart and/or a block diagram of a method, an apparatus (a system), and a computer program product according to the embodiments of the present invention. It will be appreciated that each flow in the flow chart and/or each block in the block diagram as well as a combination of the flow in the flow chart and/or the block in the block diagram may be implemented by computer program instructions. These computer program instructions may be provided to a processor of a universal computer, a dedicated computer, an embedded handler or other programmable data processing apparatuses to generate a machine such that the instructions executed by a processor of a computer or other programmable data processing apparatuses generate a device for achieving a function specified in one or more flows of a flow chart or one or more blocks in a block diagram.

These computer program instructions may also be stored in a computer readable memory capable of guiding a computer or other programmable data processing apparatuses to operate in a particular manner such that the instructions stored in the computer readable memory generate a product including a command device that achieves a function specified in one or more flows of a flow chart or one or more blocks in a block diagram.

These computer program instructions may also be loaded onto a computer or other programmable data processing apparatuses such that a series of operation steps are performed on the computer or other programmable apparatuses to produce processing realized by a computer so that the instructions executed on the computer or other programmable apparatuses provide steps for achieving the functions specified in one or more flows of a flow chart or one or more blocks in a block diagram.

It will be apparent to those skilled in the art that various variations and modifications can be made to the present invention without departing from the spirit and scope of the present invention. In this way, the present invention is intended to embrace these modifications and variations if the modifications and variations of the present invention are within the scope of the appended claims and the equivalents thereof.

**Claims**

1. A method for a mobile robot to self-establish a map indoors, **characterized in that** the method comprises the following steps:

   forming an initialized map;
   marking a coordinate origin in the initialized map;
   causing the robot to travel throughout indoor accessible regions to record path information and environment information;
   causing the robot to calculate and mark a CV value of each grid in the map ; and
   establishing the map according to the path information and the CV value.

2. The method according to claim 1, **characterized in that** said step of forming an initialized map further comprises:

   the map is a meshed pattern constituted by a series of square grids;
   the map marks positions of an indoor environment in form of grids, each grid representing an indoor region with an actual size of 200 mm × 200 mm; and
   a user sets a size of the initialized map according to an indoor movable range of the robot.

3. The method according to claim 1 or 2, **characterized in that** the map stores information of a grid in a two-dimensional array, the two-dimensional array has a data type that is a customized data structure AStarNode defined as follows:

```
typedef struct AStarNode
{
  int s_x;
  int s_y;
  int s_g;
  int s_h;
  int s_cv;
  struct AStarNode * s_parent;
  int s_is_in_closetable;
  int s_is_in_opentable;
} AStarNode;
AStarNode map_maze [400] [400];
```

   wherein, map_maze is a two-dimensional array of the AstarNode data structure; s_x is position information of horizontal coordinates (X coordinates); s_y is position information of vertical coordinates (Y coordinates); s_cv indicates the CV value of each grid, representing a probability that each grid is occupied by an obstacle and ranging from 0 to 1, 0 showing that the grid is not occupied by any obstacle, 1 showing that the grid is occupied by the obstacle, and a larger CV value means a greater probability that the grid is occupied by the obstacle; in the initialized map, the CV value of each grid is 1, showing that all of grids are occupied by obstacles.

4. The method according to claim 1, **characterized in that** said step of marking a coordinate origin in the initialized map further comprises:

   taking a robot charging pile as the coordinate origin of the map; and
   taking an east-west direction as an X-axis and taking a south-north direction as a Y-axis.

5. The method according to claim 1, **characterized in that** said step of causing the robot to travel throughout indoor accessible regions to record path information and environment information further comprises:

   the robot records data path information and the CV value during it travels indoors;
   the robot marks position information of the accessible regions in the map according to measured values of a mileometer; and
   the robot marks the CV value in the map according to values fusion-measured by an ultrasonic sensor.

6. The method according to claim 1 or 5, **characterized in that** the robot calculates X and Y coordinate values of a position in which it is located according to a mileometer in the following manner:

X coordinate value $X(k) = X(0) + \sum_{i=1}^{k-1} D(i)\cos(\varphi(i))$

Y coordinate value $Y(k) = Y(0) + \sum_{i=1}^{k-1} D(i)\sin(\varphi(i))$

angular change $\varphi(k) = \varphi(0) + \sum_{i=1}^{k-1} \Delta\varphi(i)$

wherein X(0), Y(0) are a position in which the robot is located at initial moment, and D(i) and φ(i) are a running distance and an orientation angle from a moment (i-1) to another moment (i) of an autonomous carriage respectively.

7. The method according to claim 1 or 5, **characterized in that** the robot performs fusion measurement by an ultrasonic sensor in two means:
a first means is data fusion of different sensors at the same moment, in which the CV value of each grid is estimated according to the Bayesian probability algorithm, and the Bayesian probability algorithm is given as follows:

obtaining the CV value by fusion of detected data of two ultrasonic sensors;
dividing a detection scope of each ultrasonic sensor into three classes including class I meaning non-occupation, class II meaning possible occupation, and class III meaning uncertainty;
defining a probability that a grid is occupied as P (O), and defining a probability that the grid is not occupied as P (E) = 1 - P (O), then

$$P(E) = \begin{cases} (k+f)/2 & (dist \in I) \\ 1-(k+f)/2 & (dist \in II) \\ 0.5 & (dist \in III) \end{cases},$$

wherein

$$k = \frac{R-r}{R},$$

$$f = \frac{\beta-\alpha}{\alpha},$$

R is an ultrasonic detection range, and r is an actually detected distance;
the CV value of each grid obtained after fusion of detected data of two ultrasonic sensors at the same

moment is $P(O \mid \{S_1\}) = \dfrac{P(S_2 \mid O) \times P(O \mid S_1)}{P(S_2 \mid O) \times P(O \mid S_1) + P(S_2 \mid \overline{O}) \times P(\overline{O} \mid S_1)}$ ; and

a second means is fusion of measured values of the ultrasonic sensor on the same grid at different time, and the CV value of the same grid at different moments is

$$P(O \mid T_k) = \frac{P(T_k \mid O) \times P(O \mid T_{k-1})}{P(T_k \mid O) \times P(O \mid T_{k-1}) + P(T_k \mid \overline{O}) \times P(\overline{O} \mid T_{k-1})}.$$

8. The method according to claim 1 or 7, **characterized in that** the method further comprises:

differentiating the CV value of each grid by colors in the map;
expressing a grid with a CV value of 0 to 0.2 that is a fully accessible region in white;
expressing a grid with a CV value of 0.2 to 0.8 that is a region where there may be an obstacle in gray; and
expressing a grid with a CV value of 0.8 to 1 that is a completely non-accessible region in black.

9. The method according to claim 1 or 7, **characterized in that** the robot self-establishes the map after travelling throughout indoors and positions of doors are artificially revised in the map, and the method further comprises:

the robot uses an ultrasonic sensor on a side to measure a distance from a wall of the robot during the robot travels indoors, and in a state in which a door is opened, it is determined that the door is present by two jumps that get larger for the first time and get smaller for the second time of readings of the ultrasonic sensor;
the robot marks a label of the door according to a middle position of the two jumps; and
after the establishment of the map is finished, labels for positions where no door exists are artificially eliminated through operating a software and positions where doors are present are labeled with other colors in an interface of the software.

10. A system for a mobile robot to self-establish a map indoors, **characterized in that** the system comprises a mileometer, an ultrasonic sensor and a processing unit, wherein the mileometer is used to calculate a distance and an angle of the robot travelling indoors; the ultrasonic sensor is used to detect information of obstacles surrounding the robot at different distances, wherein the robot has one ultrasonic sensor on each of both sides and has one or more ultrasonic sensors on a front side; and the processing unit is used to calculate path information of the travelling robot and grid information of the map and store grid data of the map.

101 ┐ form initialized map

102 ┐ mark original in initialized map

103 ┐ record path information and environment information

104 ┐ calculate and mark CV value of each grid

105 ┐ establish map according to path information and CV value

FIG. 1

201 ── form initialized meshed grid map

202 ── assign CV value to grid map

203 ── mark coordinate original

FIG.2

FIG.3

301 — record travelling distance of robot

302 — calculate angular change of robot during it travels

303 — calculate travelling distance in X axis and Y axis of robot

304 — calculate positional coordinates of robot

FIG.4

FIG.5

401 — use two ultrasonic sensors to detect data

402 — calculate CV value

403 — mark CV value in map

FIG.6

| (a) ultrasonic model | (b) schematic diagram for fusion of two ultrasonic waves |

FIG.7

501 — record two jumps of readings of ultrasonic detector

502 — calculate middle position of two jumps

503 — artificially eliminate labels for positions where no door exists

FIG.8

601

| mileometer |

602

| ultrasonic
sensor |

603

| processing
unit |

FIG.9

# INTERNATIONAL SEARCH REPORT

| International application No. |
| --- |
| PCT/CN2016/091033 |

## A. CLASSIFICATION OF SUBJECT MATTER

G01C 21/20 (2006.01) i; G01C 22/00 (2006.01) i; G05D 1/02 (2006.01) i; G01C 21/32 (2006.01) i
According to International Patent Classification (IPC) or to both national classification and IPC

## B. FIELDS SEARCHED

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

VEN, CNABS: self-built, modeling, sweeper, ultrasound, sensor, Map, indoor, robot, creat+, generat+, establish+, grid+

## C. DOCUMENTS CONSIDERED TO BE RELEVANT

| Category* | Citation of document, with indication, where appropriate, of the relevant passages | Relevant to claim No. |
| --- | --- | --- |
| PX | CN 105043396 A (BEIJING EVOLVER ROBOTICS CO., LTD.), 11 November 2015 (11.11.2015), claims 1-10 | 1-10 |
| Y | CN 104808671 A (SOUTHEAST UNIVERSITY), 29 July 2015 (29.07.2015), description, paragraphs [0007]-[0038], and figures 1 and 3 | 1-8, 10 |
| A | CN 104808671 A (SOUTHEAST UNIVERSITY), 29 July 2015 (29.07.2015), description, paragraphs [0007]-[0038], and figures 1 and 3 | 9 |
| Y | CN 104731101 A (HOHAI UNIVERSITY, CHANGZHOU CAMPUS), 24 June 2015 (24.06.2015), description, paragraphs [0004]-[0065], and figures 1-4 | 1-8, 10 |
| A | CN 104731101 A (HOHAI UNIVERSITY, CHANGZHOU CAMPUS), 24 June 2015 (24.06.2015), description, paragraphs [0004]-[0065], and figures 1-4 | 9 |
| A | CN 101619985 A (SHANGHAI JIAOTONG UNIVERSITY), 06 January 2010 (06.01.2010), the whole document | 1-10 |
| A | CN 101033971 A (HEFEI INSTITUTES OF PHYSICAL SCIENCE, CHINESE ACADEMY OF SCIENCES), 12 September 2007 (12.09.2007), the whole document | 1-10 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 October 2016 (21.10.2016) | 27 October 2016 (27.10.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer ZHANG, Yaling Telephone No.: (86-10) 62085722 |
| --- | --- |

Form PCT/ISA/210 (second sheet) (July 2009)

## INTERNATIONAL SEARCH REPORT

| | International application No. |
|---|---|
| | **PCT/CN2016/091033** |

**C (Continuation).    DOCUMENTS CONSIDERED TO BE RELEVANT**

| Category* | Citation of document, with indication, where appropriate, of the relevant passages | Relevant to claim No. |
|---|---|---|
| A | CN 204374771 U (SHANGHAI VIEW TECHNOLOGIES CO., LTD.), 03 June 2015 (03.06.2015), the whole document | 1-10 |
| A | US 2014005933 A1 (EVOLUTION ROBOTICS INC.), 02 January 2014 (02.01.2014), the whole document | 1-10 |

Form PCT/ISA/210 (continuation of second sheet) (July 2009)

## INTERNATIONAL SEARCH REPORT
### Information on patent family members

International application No.

**PCT/CN2016/091033**

| Patent Documents referred in the Report | Publication Date | Patent Family | Publication Date |
|---|---|---|---|
| CN 105043396 A | 11 November 2015 | None | |
| CN 104808671 A | 29 July 2015 | None | |
| CN 104731101 A | 24 June 2015 | None | |
| CN 101619985 A | 06 January 2010 | CN 101619985 B | 04 May 2011 |
| CN 101033971 A | 12 September 2007 | CN 101033971 B | 16 February 2011 |
| CN 204374771 U | 03 June 2015 | None | |
| US 2014005933 A1 | 02 January 2014 | EP 2839399 A1 | 25 February 2015 |
| | | JP 5931287 B2 | 08 June 2016 |
| | | US 2015261223 A1 | 17 September 2015 |
| | | JP 2016157473 A | 01 September 2016 |
| | | EP 2839399 A4 | 15 June 2016 |
| | | WO 2014055278 A1 | 10 April 2014 |
| | | JP 2015519677 A | 09 July 2015 |
| | | US 2016069691 A1 | 10 March 2016 |
| | | AU 2013327774 A1 | 30 October 2014 |
| | | US 9218003 B2 | 22 December 2015 |
| | | AU 2016213835 A1 | 01 September 2016 |
| | | US 9404756 B2 | 02 August 2016 |
| | | CA 2870381 A1 | 10 April 2014 |
| | | CA 2935223 A1 | 10 April 2014 |
| | | AU 2013327774 B2 | 19 May 2016 |
| | | AU 2016202515 A1 | 12 May 2016 |
| | | US 8798840 B2 | 05 August 2014 |
| | | EP 3018603 A1 | 11 May 2016 |

Form PCT/ISA/210 (patent family annex) (July 2009)